(19) Europäisches Patentamt
European Patent Office
Office européen des brevets

(11) **EP 3 338 261 B1**

(12) **FASCICULE DE BREVET EUROPEEN**

(45) Date de publication et mention de la délivrance du brevet:
**14.10.2020 Bulletin 2020/42**

(21) Numéro de dépôt: **16760533.6**

(22) Date de dépôt: **05.08.2016**

(51) Int Cl.:
*G08B 21/06* *(2006.01)*    *B60K 28/06* *(2006.01)*

(86) Numéro de dépôt international:
**PCT/FR2016/052038**

(87) Numéro de publication internationale:
**WO 2017/029443 (23.02.2017 Gazette 2017/08)**

(54) **PROCÉDÉ DE DÉTERMINATION D'UN NIVEAU D'ATTENTION D'UN CONDUCTEUR D'UN VÉHICULE AUTOMOBILE ET MÉTHODE DE STIMULATION DE L'ATTENTION D'UN CONDUCTEUR D'UN VÉHICULE AUTOMOBILE**

VERFAHREN ZUR BESTIMMUNG DES AUFMERKSAMKEITSGRADES EINES FAHRERS EINES KRAFTFAHRZEUGS UND VERFAHREN ZUR STIMULIERUNG DER AUFMERKSAMKEIT EINES FAHRERS EINES KRAFTFAHRZEUGS

METHOD FOR DETERMINING THE LEVEL OF ATTENTION OF A DRIVER OF A MOTOR VEHICLE AND METHOD FOR STIMULATING THE ATTENTION OF A DRIVER OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.08.2015 FR 1557792**

(43) Date de publication de la demande:
**27.06.2018 Bulletin 2018/26**

(73) Titulaire: **RENAULT s.a.s.**
**92100 Boulogne-Billancourt (FR)**

(72) Inventeurs:
• **ILLY, Herve**
**92190 Meudon (FR)**
• **AMEYOE, Ablamvi**
**78280 Guyancourt (FR)**
• **CHEVREL, Philippe**
**44470 Carquefou (FR)**
• **MARS, Franck**
**44400 Reze (FR)**
• **LE CARPENTIER, Eric**
**44700 Orvault (FR)**

(56) Documents cités:
**WO-A1-03/039914**        **WO-A1-2006/131256**
**DE-T5-112012 006 127**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 338 261 B1

**Description**

DOMAINE TECHNIQUE AUQUEL SE RAPPORTE L'INVENTION

La présente invention concerne de manière générale le domaine des aides à la conduite pour les conducteurs de véhicules automobiles.

Elle concerne plus particulièrement un procédé de détermination d'un niveau d'attention d'un conducteur, comprenant les étapes suivantes :

i) on acquiert, au cours d'un premier intervalle temporel, plusieurs valeurs successives d'une grandeur effective représentative d'une action de commande du conducteur du véhicule automobile sur un organe de pilotage de ce véhicule, et

iii) on détermine le niveau d'attention du conducteur en fonction desdites valeurs acquises.

L'invention concerne également une méthode de stimulation de l'attention d'un conducteur d'un véhicule automobile.

ARRIERE-PLAN TECHNOLOGIQUE

Au cours d'un trajet d'un véhicule automobile, il peut arriver que le conducteur réduise l'attention qu'il porte à la conduite de ce véhicule, par exemple à cause d'un état de fatigue, ou parce qu'il consacre une partie de son attention à une activité secondaire telle que la recherche d'un itinéraire sur une carte routière.

Cette baisse d'attention rend la conduite du véhicule moins précise, et peut, dans certains cas, exposer le véhicule à un risque d'accident accru.

Aussi est-il particulièrement intéressant de déterminer un niveau d'attention dans la conduite de ce véhicule, afin par exemple de déclencher un signal sonore alertant ce conducteur d'une baisse d'attention lorsque celle-ci est détectée.

On connait du document US 6061610 un procédé permettant de détecter que le conducteur d'un véhicule a une activité secondaire, en plus de la conduite de ce véhicule: Au cours de ce procédé, la position angulaire du volant de direction est mesurée à plusieurs instants successifs. Une position angulaire ultérieure du volant, qui est supposée correspondre à une conduite attentive du véhicule, est ensuite prédite par lissage et extrapolation des positions angulaires du volant mesurées antérieurement. Une erreur de prédiction égale à la différence entre cette position angulaire ultérieure prédite et une position angulaire mesurée est ensuite calculée. Un nombre fini de ces erreurs de prédiction générées pendant un intervalle temporel prédéterminé sert ensuite de base pour détecter que le conducteur du véhicule a une activité secondaire. La demanderesse a constaté que ce procédé de détection présentait des résultats parfois peu fiables.

Les documents DE 11 2012 006127 T5 et WO 03/039914 A1 décrivent des procédés de détermination d'un niveau d'attention d'un conducteur de véhicule automobile.

OBJET DE L'INVENTION

Par rapport à l'état de la technique précité, la présente invention propose un nouveau procédé de détermination du niveau d'attention d'un conducteur d'un véhicule automobile, dont la fiabilité de détermination est améliorée. L'invention est définie par les revendications.

Plus particulièrement, on propose selon l'invention un procédé tel que défini en introduction, comprenant en outre, à intervalles temporels successifs, une étape ii) de détermination d'un type de route sur laquelle circule le véhicule automobile, et de vérification si ledit type de route a changé depuis l'intervalle précédent, et dans lequel, à l'étape iii), le niveau d'attention du conducteur est déterminé en fonction également du résultat de la vérification d'un changement de type de route.

La demanderesse a constaté que les erreurs du procédé décrit dans le document US 6061610 surviennent au moment où le véhicule passe d'une route peu sinueuse à une route sinueuse.

L'invention propose alors de tenir compte de ce paramètre afin notamment de ne pas détecter à tort des baisses de vigilance du conducteur.

Plus précisément, grâce à cette vérification d'un changement de type de route, la prise en compte des valeurs successives de la grandeur effective représentative d'une action de commande du conducteur du véhicule automobile sur l'organe de pilotage de ce véhicule, en vue de la détermination du niveau d'attention du conducteur, est effectuée de manière plus réaliste, en tenant compte au mieux de l'évolution des conditions dans lesquelles circule ce véhicule. La fiabilité de la détermination du niveau d'attention du conducteur en est avantageusement améliorée.

En particulier, on évite ainsi de confondre une variation temporelle desdites valeurs successives due simplement à un changement de type de route, et une variation temporelle desdites valeurs successives qui indiquerait un niveau donné d'attention du conducteur, par exemple un niveau d'attention faible.

D'autres caractéristiques non limitatives et avantageuses du procédé de détermination conforme à l'invention sont les suivantes :

- préalablement à l'étape iii), on calcule une valeur préliminaire du niveau d'attention puis on valide au cours de l'étape iii) ladite valeur préliminaire seulement s'il résulte de l'étape ii) que le type de route n'a pas changé au cours de plusieurs intervalles temporels précédents ;
- lesdits plusieurs intervalles temporels précédents forment ensemble un deuxième intervalle temporel qui est au moins aussi long que ledit premier intervalle temporel ;
- au cours de l'étape ii), on acquiert une valeur représentative de la sinuosité de la route sur laquelle circule le véhicule automobile, et on détermine le type de route sur laquelle circule le véhicule automobile en fonction de cette valeur représentative de la sinuosité de ladite route ;
- à l'étape ii), on acquiert une image d'une portion de la route sur laquelle circule le véhicule automobile et on détermine une valeur de courbure de cette portion de la route par analyse d'image, et dans lequel ladite valeur représentative de la sinuosité de la route est calculée en fonction d'au moins ladite valeur de courbure ; et
- préalablement à l'étape iii), on détermine, à plusieurs instants dudit premier intervalle temporel, une grandeur cible représentative d'une action que le conducteur devrait effectuer sur ledit organe de pilotage si le niveau d'attention du conducteur était élevé, on compare, à chacun de ces instants, ladite grandeur cible et ladite grandeur effective, et, à l'étape iii), on détermine le niveau d'attention en fonction des résultats desdites comparaisons.

Dans un mode préféré de réalisation de l'invention, ladite comparaison consiste à calculer une différence entre ladite grandeur effective et ladite grandeur cible, et :

- on calcule une valeur efficace de référence desdites différences calculées pendant le premier intervalle temporel,
- on sélectionne les différences calculées pendant un troisième intervalle temporel plus court que le premier intervalle temporel et inclus dans celui-ci,
- on calcule une valeur efficace à temps court desdites différences sélectionnées,
- on compare ladite valeur efficace à temps court à ladite valeur efficace de référence, et
- on détermine ladite valeur préliminaire du niveau d'attention du conducteur en fonction du résultat de la comparaison de ladite valeur efficace à temps court à ladite valeur efficace de référence.

D'autres caractéristiques avantageuses du procédé de détermination conforme à l'invention apparaissent à la lecture de la description parmi lesquelles :

- ladite grandeur effective est un couple effectivement exercé par le conducteur sur un volant de direction du véhicule ; ou que
- ladite grandeur effective est une position angulaire effective d'un volant de direction du véhicule.

L'invention propose également une méthode de stimulation de l'attention d'un conducteur d'un véhicule automobile, au cours de laquelle :

- on détermine un niveau d'attention du conducteur du véhicule par l'exécution d'un procédé tel que décrit ci-dessus, et
- on déclenche un signal d'avertissement à destination du conducteur, lorsque le niveau d'attention précédemment déterminé est inférieur à un seuil d'attention prédéterminé.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 est un organigramme qui représente schématiquement les principales étapes d'un procédé de détermination de l'attention d'un conducteur d'un véhicule automobile selon l'invention, et d'une méthode de stimulation de l'attention de ce conducteur selon l'invention,
- la figure 2 est un organigramme qui représente en détail une étape de détermination d'un type de route, qui est mise en œuvre au cours du procédé de détermination de la figure 1,
- les figures 3A à 3D représentent schématiquement l'évolution au cours du temps de différentes grandeurs évaluées lors de l'exécution de l'étape de détermination de la figure 2, pour un exemple de trajet routier,

- la figure 4 est un organigramme qui représente en détail une étape de détermination d'une valeur préliminaire du niveau d'attention du conducteur du véhicule automobile, qui est mise en œuvre au cours du procédé de détermination de la figure 1,
- la figure 5 représente schématiquement, sous la forme d'un schéma-bloc, un modèle mathématique qui est représentatif du comportement neuromusculaire d'un conducteur et qui est utilisé au cours de l'étape de détermination de la figure 4,
- les figures 6A à 6D représentent schématiquement l'évolution au cours du temps de différentes grandeurs évaluées au cours de l'étape de détermination de la figure 4, lors d'un trajet sur une route peu sinueuse,
- les figures 7A à 7D représentent schématiquement l'évolution au cours du temps des mêmes grandeurs que sur les figures 6A à 6D, mais lors d'un trajet sur une route sinueuse, et
- les figures 8A à 8C représentent schématiquement l'évolution au cours du temps de différentes grandeurs évaluées au cours du procédé de détermination de la figure 1, pour un exemple de trajet routier.

Le présent exposé porte sur un procédé d'aide à la conduite pour le conducteur d'un véhicule automobile.

De manière préliminaire, on notera que pour mettre en œuvre ce procédé, le véhicule automobile sera équipé d'un calculateur comportant un processeur, une mémoire vive MEM, une mémoire morte, et différentes interfaces d'entrée et de sortie.

Grâce à ses interfaces d'entrée, le calculateur est adapté à recevoir des signaux d'entrée provenant de différents capteurs. Parmi ces signaux d'entrée, le calculateur reçoit des images provenant d'une caméra orientée vers une zone située à l'avant du véhicule.

La mémoire morte mémorise des données utilisées dans le cadre du procédé décrit ci-dessous.

Elle mémorise notamment une application informatique, constituée de programmes d'ordinateur comprenant des instructions dont l'exécution par le processeur permet la mise en œuvre par le calculateur du procédé décrit ci-après.

Enfin, grâce à ses interfaces de sortie, le contrôleur est adapté à transmettre des signaux de sortie, dont notamment un signal de commande d'un organe permettant d'éveiller l'attention du conducteur.

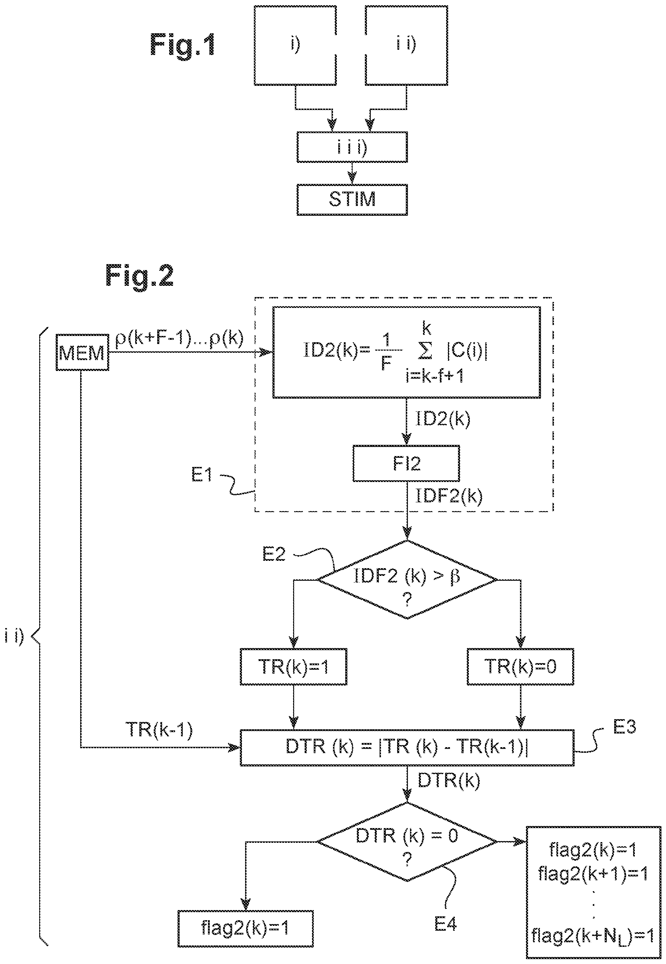

Sur la figure 1, on a plus précisément représenté les principales étapes i), ii) et iii) d'un procédé de détermination d'un niveau d'attention d'un conducteur d'un véhicule automobile.

On a également représenté sur cette figure les principales étapes d'une méthode de stimulation de l'attention de ce conducteur permettant de l'avertir du fait que son niveau d'attention baisse. Cette méthode de stimulation comprend les étapes i), ii) et iii) du procédé précité, suivies ici d'une étape de stimulation STIM au cours de laquelle on déclenche un signal d'avertissement à destination du conducteur, lorsque le niveau d'attention précédemment déterminé est inférieur à un seuil d'attention prédéterminé.

De manière remarquable, les étapes du procédé de détermination du niveau d'attention du conducteur du véhicule automobile sont les suivantes :

i) le calculateur acquiert, au cours d'un premier intervalle temporel, plusieurs valeurs successives d'une « grandeur effective » qui est représentative d'une action de commande du conducteur du véhicule automobile sur un organe de pilotage de ce véhicule,

ii) le calculateur détermine un « type de route » sur laquelle circule le véhicule automobile, et on vérifie si ledit type de route a changé depuis un intervalle temporel antérieur,

l'étape ii) étant répétée à intervalles temporels successifs, et

iii) le calculateur détermine le niveau d'attention du conducteur en fonction desdites valeurs acquises, et du résultat de ladite vérification d'un changement de type de route.

Le caractère plus ou moins sinueux de la route sur laquelle circule le véhicule automobile influençant fortement le résultat de l'étape i), il est donc particulièrement intéressant, comme c'est le cas ici, de déterminer à l'étape iii) le niveau d'attention du conducteur du véhicule en prenant en compte ce caractère plus ou moins sinueux.

Ici, plus précisément, l'étape i) consiste à calculer une valeur préliminaire flag1(k) du niveau d'attention du conducteur du véhicule à un instant k.

L'étape ii) consiste quant à elle à calculer un indicateur flag2(k) relatif au fait que le type de route sur laquelle roule le véhicule automobile a ou non récemment changé.

L'étape iii) consiste enfin à valider ensuite ladite valeur préliminaire flag1(k) seulement s'il résulte de l'étape ii) que le type de route n'a pas changé au cours de plusieurs intervalles temporels précédents.

Autrement formulé, le calculateur détermine ici ladite valeur préliminaire flag1(k) indépendamment du fait qu'un changement de type de route ait été détecté ou non lors de l'étape ii).

En variante, on pourrait prévoir de traiter les étapes i) et ii) en combinaison, pour calculer les valeurs de ladite grandeur effective en tenant compte du fait qu'un changement de type de route ait été détecté ou non.

L'étape ii), qui constitue le cœur de l'invention, est représentée en détail sur la figure 2 sous la forme d'un organigramme.

Au cours de cette étape ii), le calculateur acquiert une image d'une portion de route faisant face au véhicule automobile, c'est-à-dire située devant le véhicule lorsqu'il fonctionne en marche avant. Cette image est acquise au moyen de la caméra embarquée dans le véhicule automobile et disposée pour pouvoir obtenir des images de l'environnement faisant face au véhicule automobile.

Le calculateur détermine ensuite, par analyse de cette image, une valeur de courbure $\rho(k)$ de cette portion de route.

Cette valeur de courbure $\rho(k)$ est égale ici à l'inverse du rayon de courbure de la courbe moyenne définie par cette portion de route. Cette courbe moyenne correspond par exemple à la ligne médiane de cette portion de route.

On calcule ensuite une valeur ID2(k) d'un premier indicateur ID2, représentative de la sinuosité de la route sur laquelle circule le véhicule automobile (étape E1), en fonction notamment de cette valeur de courbure $\rho(k)$.

Cette valeur ID2(k) est calculée à intervalles temporels successifs. Ces intervalles temporels successifs séparent les instants pour lesquels cette valeur est calculée. Ces différents instants successifs sont ici régulièrement séparés par un pas de temps $\Delta t$, et sont repérés par leur indice k.

On pourrait prévoir de calculer la valeur ID2(k) en fonction uniquement de la valeur de courbure $\rho(k)$ correspondante.

Toutefois, préférentiellement, le calculateur déterminera à l'instant k la valeur ID2(k) en fonction de plusieurs valeurs de courbure $\rho(k)$, $\rho(k-1)$, ...

En d'autres termes, on considérera plusieurs valeurs de courbure acquises au cours d'un intervalle temporel constitué d'un nombre fini d'instants k. Il sera ainsi possible de considérer les F derniers instants k (l'ensemble des F derniers instants k formant alors ce qu'on appelle « une fenêtre temporelle glissante »).

Plus précisément, pour calculer cette valeur ID2(k), le calculateur sélectionne tout d'abord un nombre F desdites valeurs de courbure $\rho(i)$, déterminées pendant un intervalle temporel s'étendant depuis un instant antérieur, d'indice k-F+1, jusqu'à l'instant d'indice k pour lequel on calcule ladite valeur ID2(k) (ces valeurs de courbure sont ici stockées dans la mémoire vive MEM du calculateur, et transmises au processeur pour réaliser le calcul de cette valeur ID2(k)). La durée de cet intervalle temporel est égale à F .$\Delta t$ où $\Delta t$ est le pas de temps séparant deux déterminations successives de la valeur de courbure de la portion de route sur laquelle circule le véhicule automobile. Cette durée est typiquement comprise entre 0,1 et 30 secondes. Ici, par exemple, elle est égale à 20 secondes.

On calcule ensuite la valeur ID2(k) représentative de la sinuosité de la route sur laquelle circule le véhicule automobile, en fonction des valeurs de courbure $\rho(i)$ sélectionnées.

Plus précisément, la valeur ID2(k) représentative de la sinuosité de la route sur laquelle circule le véhicule automobile est ici égale à la moyenne arithmétique des valeurs absolues de ces courbures :

$$\mathrm{ID2(k)} = \frac{1}{F} \sum_{i=k\text{-}F+1}^{k} |\rho(i)| \qquad \text{(F1)}$$

Ladite valeur ID2(k) est donc égale, ici, à la valeur moyenne, calculée sur la durée F. $\Delta t$, de la valeur absolue de la courbure de la route sur laquelle circule le véhicule automobile.

Pour une route sinueuse comprenant une alternance de virages à gauche et de virages à droite, les valeurs correspondantes de courbures peuvent être alternativement positives et négatives.

Comme on calcule ici la moyenne des valeurs absolues $|\rho(i)|$ desdites courbures $\rho(i)$, les contributions d'un virage à gauche et d'un virage à droite s'ajoutent, et participent toutes deux à augmenter ladite valeur ID2(k) représentative de la sinuosité de la route, au lieu de se compenser, voire de s'annuler complètement l'une avec l'autre comme ce serait le cas si l'on calculait la moyenne de ces courbures $\rho(i)$, plutôt que la moyenne de leurs valeurs absolues.

Ce premier indicateur ID2 peut présenter des variations rapides au cours du temps correspondant à des effets parasites. Aussi, pour rendre plus robuste la détermination du type de route sur laquelle circule le véhicule automobile, l'évolution temporelle de ce premier indicateur ID2 est filtrée au moyen d'un filtre, ici un filtre passe-bas, pour obtenir un premier indicateur filtré IDF2. Ce filtrage est réalisé lors de l'étape suivante FI2, au cours de laquelle une valeur IDF2(k) de ce premier indicateur filtré IDF2 est calculée.

Le filtre passe-bas utilisé pour cela est ici un filtre passe-bas d'ordre un, dont la fonction de transfert en représentation de Laplace est :

$$\frac{1}{1 + s\, T_{\mathrm{IND2}}} \qquad \text{(F2)}$$

où s est la variable de Laplace.

La constante de temps $T_{IND2}$ de ce filtre passe-bas est préférentiellement supérieure à la durée $F \cdot \Delta t$ associée au calcul de moyenne (formule (F1)) par lequel on détermine ladite valeur ID2(k). Cette constante de temps vise à atténuer les variations brusques et est typiquement comprise entre 0,1 seconde et 20 secondes. Ici, par exemple, cette constante de temps $T_{IND2}$ est égale à 1 seconde.

Lors de l'étape E2 suivante, le calculateur détermine le type de route TR(k) sur laquelle circule le véhicule automobile en comparant la valeur IDF2(k) de ce premier indicateur filtré IDF2 à un seuil de sinuosité $\beta$ prédéterminé.

Lorsque cette valeur IDF2(k) est inférieure ou égale au seuil de sinuosité $\beta$, on détermine que la route est peu sinueuse. On attribue alors la valeur 0 à une variable TR représentative du type de route sur laquelle circule le véhicule automobile, soit : TR(k)=0.

Au contraire, lorsque cette valeur IDF2(k) est supérieure au seuil de sinuosité $\beta$, on détermine que la route est sinueuse. Le calculateur attribue alors la valeur 1 à la variable TR représentative du type de route sur laquelle circule le véhicule automobile, soit : TR(k)=1.

La valeur du seuil de sinuosité $\beta$ peut par exemple être ajustée, à l'issu d'essais de conduite, pour permettre en pratique une discrimination efficace entre une route sinueuse et une route peu sinueuse. Préférentiellement, la valeur du seuil de sinuosité $\beta$ est comprise entre 1/(200 mètres) et 1/(10 mètres). Ici, par exemple, elle est égale à 1/(20 mètres).

Ici le calculateur détermine que le type de route correspond :

- soit à une route peu sinueuse,
- soit à une route sinueuse.

En variante, plus de deux types de route différents pourraient être déterminés au cours de l'étape ii). A titre d'exemple, on pourrait considérer que le type de route puisse être qualifié de route très sinueuse, de route sinueuse, et de route sensiblement rectiligne.

Quoi qu'il en soit, l'étape ii) comprend ensuite :

- une étape E3 au cours de laquelle le calculateur calcule une valeur DTR(k) représentative d'un changement de type de route, suivie par
- une étape E4 au cours de laquelle le calculateur vérifie si le type de route a changé depuis l'intervalle temporel précédent, c'est-à-dire ici depuis l'instant précédent d'indice k-1, au moyen de ladite valeur DTR(k) représentative d'un changement de type de route.

A l'étape E3, la valeur DTR(k) représentative d'un changement de type de route est déterminée en fonction :

- de la valeur TR(k) à l'instant d'indice k de la variable TR représentative du type de route sur laquelle circule le véhicule automobile, et
- de la valeur TR(k-1) à l'instant précédent d'indice k-1 de cette variable TR représentative du type de route sur laquelle circule le véhicule automobile.

Ici, plus précisément, la valeur DTR(k) représentative d'un changement de type de route est égale à la valeur absolue de la différence entre ces deux valeurs successives de la variable TR représentative du type de route sur laquelle circule le véhicule automobile :

$$DTR(k) = |TR(k)\text{-}TR(k\text{-}1)| \qquad (F3)$$

Au cours de l'étape E4, lorsque ladite valeur DTR(k) représentative d'un changement de type de route est nulle, c'est à dire lorsque le type de route sur laquelle circule le véhicule automobile n'a pas changé depuis l'intervalle temporel précédent (ou, de manière équivalente, depuis l'instant précédent), une première valeur, ici égale à 1, est alors attribuée à un indicateur flag2 relatif au fait que le type de route sur laquelle roule le véhicule automobile a ou non récemment changé : flag2(k) = 1.

Au contraire, lorsque ladite valeur DTR(k) représentative d'un changement de type de route est différente de 0, c'est-à-dire lorsque le type de route sur laquelle circule le véhicule automobile a changé depuis l'intervalle temporel précédent, une deuxième valeur différente de la première, et ici égale à 0, est alors attribuée à l'indicateur flag2.

Suite à cette détection d'un changement de type de route, la valeur flag2(k) de l'indicateur flag2 est plus précisément maintenue à 0 pendant toute la durée d'un deuxième intervalle temporel s'étendant depuis l'instant (d'indice k) pour lequel on a ainsi détecté un changement de type de route, jusqu'à un instant ultérieur (d'indice $k+N_L$) : flag2(k) = 0, flag2(k+1) = 0, ..., flag2($k+N_L$) = 0.

Lorsque la valeur de l'indicateur flag2 est égale 0, cela signifie donc qu'un changement de type de route a été détecté récemment (c'est-à-dire détecté à une date séparée de l'instant présent par une durée inférieure à celle dudit deuxième intervalle temporel).

La durée de ce deuxième intervalle temporel est précisée plus loin, lors de la description de l'étape iii).

En variante, la valeur de courbure $\rho(k)$ de la portion de route faisant face au véhicule automobile déterminée au cours de cette étape ii) pourrait être obtenue autrement. Ainsi, à titre d'exemple elle pourrait être fournie par un système de navigation comprenant un dispositif de localisation par GPS ou GSM (selon les acronymes anglo-saxons de « Global Positioning System » et de « Global System for Mobile communication ») associé à des données cartographiques informatisées du réseau routier emprunté par le véhicule automobile.

Selon une autre variante, le type de route sur laquelle circule le véhicule automobile pourrait être déterminé en fonction de l'un ou l'autre de plusieurs des éléments suivants :

- la catégorie de cette route, c'est-à-dire par exemple le fait qu'il s'agisse d'une autoroute ou d'une route moyenne destinée à une déserte locale,
- le nombre de voies de circulation de cette route,
- l'état du trafic sur cette route, et
- localisation de cette route, en zone urbaine, rurale, ou de montagne par exemple.

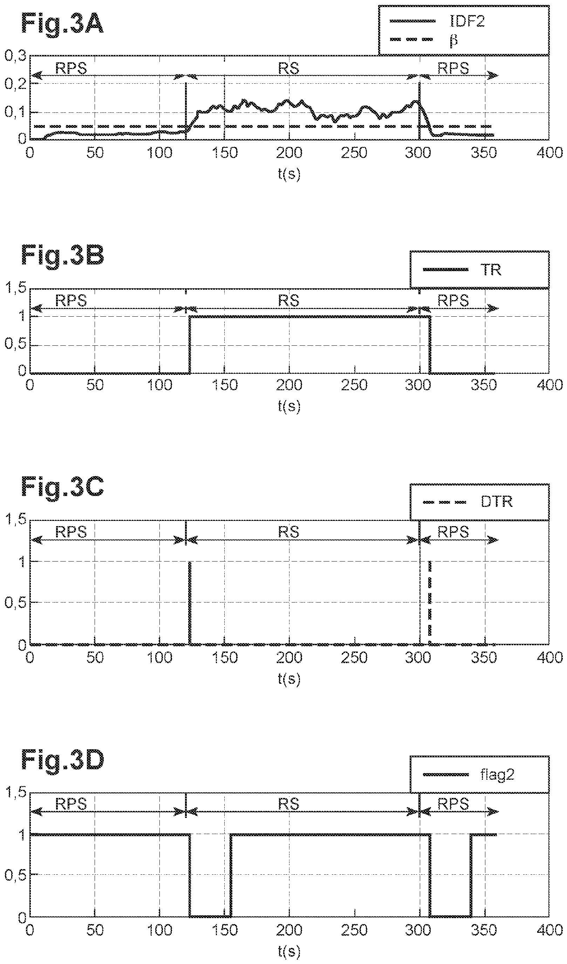

Sur les figures 3A à 3D, on a représenté l'évolution au cours du temps t de différentes grandeurs évaluées au cours de l'étape ii) décrite ci-dessus, pour un essai de conduite réalisé par un conducteur sur un simulateur de conduite. Ce conducteur est un conducteur réel, c'est-à-dire une personne physique. Au cours de cet essai, le niveau d'attention du conducteur est élevé.

Cet essai correspond :

- des instants t=0 à t=120 secondes, à une conduite sur route peu sinueuse RPS,
- des instants t=120 à t=300 secondes, à une conduite sur route sinueuse RS, et
- à nouveau, des instants t=300 à t=360 secondes, à une conduite sur route peu sinueuse RPS.

Sur les figures 3A à 3D, on a respectivement représenté, en fonction du temps t, indiqué en secondes :

- la valeur IDF2(k) du premier indicateur filtré IDF2 ; cette valeur est indiquée sur la figure 3A en mètres à la puissance moins 1 ;
- la valeur TR(k) de la variable TR représentative du type de route sur laquelle circule le véhicule automobile (figure 3B) ;
- la valeur DTR(k) de la variable DTR représentative du changement du type de route sur laquelle circule le véhicule automobile (figure 3C) ; et
- la valeur flag2(k) de l'indicateur flag2 relatif au fait que le type de route sur laquelle roule le véhicule automobile a ou non récemment changé (figure 3D).

On constate sur la figure 3A que les valeurs du premier indicateur filtré IDF2 sont nettement différentes lors d'une conduite sur route sinueuse RS et lors d'une conduite sur route peu sinueuse RPS. Cela illustre que les valeurs du premier indicateur ID2 décrit précédemment sont effectivement représentatives du type de route sur laquelle circule le véhicule automobile, c'est-à-dire ici qu'elles sont effectivement représentative du caractère sinueux ou peu sinueux de cette route.

La figure 3C illustre par ailleurs que la valeur de la variable DTR change effectivement lors d'un changement du type de route sur laquelle circule le véhicule automobile, en l'occurrence, pour cet essai, peu après les instants t=120 secondes et t=300 secondes.

On constate également, sur la figure 3D, que la valeur de l'indicateur flag2 relatif au fait que le type de route sur laquelle roule le véhicule automobile a ou non récemment changé est effectivement égale à 0 pendant ledit deuxième intervalle temporel qui s'étend depuis la détection d'un changement de type de route jusqu'à un instant ultérieur à cette détection (ce deuxième intervalle temporel durant ici 30 secondes).

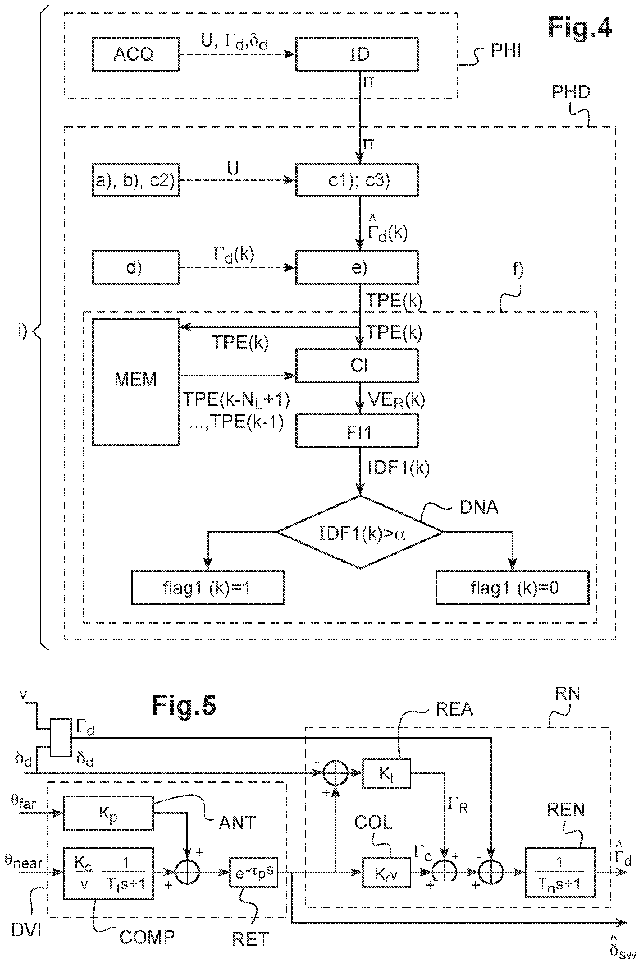

On peut maintenant s'intéresser à l'étape i) de la figure 1, dont on rappelle qu'elle permet de calculer la valeur préliminaire flag1(k) du niveau d'attention du conducteur du véhicule. Cette étape i) est représentée schématiquement en figure 4 sous la forme d'un organigramme.

Cette étape comprend :

- une phase d'identification PHI de paramètres d'un modèle mathématique qui est représentatif du comportement neuromusculaire de ce conducteur, et
- une phase de diagnostique PHD, au cours de laquelle le calculateur détermine la valeur préliminaire flag1(k) du niveau d'attention de ce conducteur, en appliquant audit modèle mathématique les paramètres précédemment identifiés.

Le modèle mathématique qui est représentatif du comportement neuromusculaire du conducteur et qui est illustré sur la figure 5 permet de déterminer une grandeur cible, représentative d'une action que le conducteur devrait effectuer sur un organe de pilotage du véhicule si son niveau d'attention était élevé. Cette grandeur cible est déterminée en fonction notamment :

- d'une donnée relative à l'environnement dans lequel évolue le véhicule, et
- d'une position effective de l'organe de pilotage du véhicule.

L'organe de pilotage du véhicule qui sera ici considéré est le volant de direction de ce véhicule.
En variante, on aurait pu envisager qu'il s'agisse d'un autre organe, par exemple de la pédale d'accélérateur et/ou de la pédale de frein.
Alors ici, le modèle mathématique permet plus précisément de déterminer un vecteur de sortie $Y = [\hat{\Gamma}_d, \hat{\delta}_{SW}]^T$ dont les composantes comprennent :

- ladite grandeur cible, à savoir ici un couple cible $\hat{\Gamma}_d$ que le conducteur devrait exercer sur le volant de direction du véhicule si son niveau d'attention était élevé, et
- une position cible dans laquelle l'organe de pilotage devrait être placé si le niveau d'attention du conducteur était élevé, à savoir ici une position angulaire cible $\hat{\delta}_{SW}$ dans laquelle le volant de direction devrait être placé si le niveau d'attention du conducteur était élevé. Le vecteur de sortie $Y = [\hat{\Gamma}_d, \hat{\delta}_{SW}]^T$ de ce modèle mathématique est déterminé ici en fonction d'un vecteur d'entrée $U = [\Gamma_S, \delta_d, \theta_{far}, \theta_{near}]^T$ dont les composantes comprennent :
- une grandeur de rappel de cet organe de pilotage vers une position de repos, en l'occurrence ici un couple de rappel $\Gamma_S$ du volant de direction du véhicule, qui a tendance à ramener ce volant dans une position angulaire médiane, c'est-à-dire dans la position angulaire pour laquelle les roues du véhicule sont alignées avec l'axe longitudinal de ce véhicule,
- la position effective (c'est-à-dire la position réelle instantanée) de l'organe de pilotage du véhicule, en l'occurrence ici une position angulaire effective $\delta_d$ du volant de direction du véhicule,
- un premier angle $\theta_{far}$ formé entre le véhicule automobile et une portion de la route sur laquelle le véhicule circule, éloignée du véhicule automobile, et
- un deuxième angle $\theta_{near}$, fonction d'un angle $\theta_{prox}$ formé entre le véhicule automobile et une autre portion de ladite route, proche du véhicule automobile.

La position angulaire effective $\delta_d$ de ce volant de direction est acquise au moyen d'un capteur qui l'équipe ou qui équipe une colonne de direction du véhicule et qui est connecté au calculateur.
Le couple de rappel $\Gamma_s$ du volant de direction est une grandeur représentative de la tendance de ce volant de direction à revenir dans sa position angulaire médiane (celle pour laquelle le véhicule se déplace en ligne droite). Le couple de rappel $\Gamma_s$ dépend notamment de la vitesse v du véhicule : le volant de direction a d'autant plus tendance à revenir dans cette position angulaire que cette vitesse v est élevée.
Aussi le couple de rappel $\Gamma_s$ du volant de direction du véhicule est-il déterminé ici en fonction notamment de :

- la vitesse v du véhicule automobile, c'est-à-dire de la vitesse à laquelle ce dernier avance, et de
- la position angulaire effective $\delta_d$ du volant de direction.

Le couple de rappel $\Gamma_s$ du volant de direction du véhicule peut être déterminé en outre en fonction de la vitesse de lacet de ce véhicule.
Cette vitesse de lacet correspond à la vitesse angulaire du véhicule par rapport à un axe perpendiculaire au plan tangeant à la portion de route sur laquelle il circule, par exemple par rapport à un axe vertical lorsque cette portion de route est horizontale.
Cette vitesse de lacet est déterminée par exemple en fonction de la position angulaire effective $\delta_d$ du volant de direction et de la vitesse v du véhicule automobile.
Les premier et deuxième angles $\theta_{far}, \theta_{near}$ sont déterminés chacun en fonction d'au moins une donnée relative à un environnement dans lequel évolue le véhicule automobile.
Ce premier angle $\theta_{far}$ et l'angle $\theta_{prox}$ formé entre le véhicule automobile et la portion de la route proche du véhicule automobile sont déterminés ici par analyse d'au moins une image de cet environnement acquise au moyen de la caméra embarquée dans le véhicule automobile.
L'analyse de cette image permet également de déterminer un écart latéral entre le véhicule automobile et l'un des bords de cette portion de la route proche du véhicule automobile, par exemple le bord droit de cette portion de route qui la sépare de son bas-côté droit.

Le deuxième angle $\theta_{near}$ est déterminé ici en fonction en outre de cet écart latéral. On prend par exemple : $\theta_{near}=\Psi_L+y_L/l_s$, où $\Psi_L$ est l'angle de cap relatif (entre le cap véhicule et le cap route), $y_L$ est l'écart latéral du véhicule par rapport au centre de la voie et $l_s$ une distance proche devant le véhicule (par exemple $l_s$=5 m).

La détermination du vecteur de sortie Y du modèle mathématique, dont on rappelle qu'il est représentatif du comportement neuromusculaire du conducteur, est réalisée ici par:

- une détermination de la position angulaire cible $\hat{\delta}_{SW}$ dans laquelle le conducteur devrait placer ce volant si son niveau d'attention était élevé, correspondant sur la figure 5 au bloc DVI, suivie par
- une détermination du couple cible $\hat{\Gamma}_d$ que le conducteur devrait exercer sur le volant de direction si son niveau d'attention était élevé, correspondant sur la figure 5 au bloc RN.

La détermination de cette position angulaire cible $\hat{\delta}_{SW}$ est réalisée en fonction notamment du premier angle $\theta_{far}$ mentionné ci-dessus, de manière à prendre en compte la tendance du conducteur à positionner son volant en fonction de la direction de la route loin devant le véhicule pour anticiper un changement de direction de cette route.

Ici, plus précisément, cette position angulaire cible $\hat{\delta}_{SW}$ est déterminée en fonction du produit de ce premier angle $\theta_{far}$, multiplié par un gain d'anticipation visuelle $K_p$ (bloc ANT sur la figure 5).

La détermination de cette position angulaire cible $\hat{\delta}_{SW}$ est réalisée également en fonction du deuxième angle $\theta_{near}$ décrit ci-dessus (bloc COMP sur la figure 5), de manière à traduire le fait que le conducteur positionne aussi le volant de direction du véhicule de manière à :

- corriger l'erreur de cap, c'est-à-dire de manière à annuler l'angle $\theta_{prox}$ formé entre le véhicule et ladite portion de la route proche du véhicule automobile, et à
- corriger l'écart latéral entre le véhicule automobile et l'un des bords de cette portion de route proche du véhicule.

Ce deuxième angle $\theta_{near}$ influe ici d'autant plus sur la valeur de ladite position angulaire cible $\hat{\delta}_{SW}$ que la vitesse v du véhicule est petite.

Cette disposition permet de modéliser le fait que le conducteur prend fortement en compte cette erreur de cap lorsque la vitesse v du véhicule est petite, tandis qu'à vitesse élevée, par exemple sur autoroute, il concentre principalement son attention sur la direction de la route loin devant le véhicule, et privilégie une anticipation de la direction future de la route (bloc ANT, figure 5) par rapport à une prise en compte de la direction de cette route au voisinage du véhicule (bloc COMP, figure 5).

Plus précisément, ladite position angulaire cible $\hat{\delta}_{SW}$ est déterminée en fonction du produit dudit deuxième angle $\theta_{near}$, multiplié par un gain de compensation $K_c$ et divisé par la vitesse v du véhicule.

Par ailleurs, l'évolution temporelle de ce deuxième angle $\theta_{near}$ est filtrée ici par un filtre passe bas favorisant des composantes de basse fréquence. Ce filtre passe-bas est un filtre du premier ordre, dont la fonction de transfert en représentation de Laplace est :

$$\frac{1}{1+s\,T_I} \qquad (F4)$$

où $T_I$ est une constante de temps caractéristique de ce filtre passe-bas, dite constante de temps de compensation.

En variante, l'évolution temporelle du deuxième angle $\theta_{near}$ pourrait être filtrée par un autre type de filtre, par exemple par un filtre passe-bas du deuxième ordre.

D'autre part, pour prendre en compte le temps que mettrait le conducteur du véhicule pour estimer cette position angulaire cible $\hat{\delta}_{SW}$, l'évolution temporelle de cette dernière est retardée d'une certaine durée (bloc RET sur la figure 5) désignée ci-dessous comme le retard au diagnostic visuel $\tau_p$ du conducteur.

Plus précisément, la somme des contributions des premier et deuxième angles est retardée par un filtre dont la fonction de transfert en représentation de Laplace est :

$$\exp(-s\,\tau_p) \qquad (F5)$$

Finalement, la position angulaire cible $\hat{\delta}_{SW}$ dans laquelle le conducteur devrait placer ce volant si son niveau d'attention était élevé est déterminée ici, en représentation de Laplace, conformément à la formule F6 suivante :

$$\hat{\delta}_{SW} = \exp(-s\,\tau_p)\left(K_p\,\theta_{far} + \frac{1}{1+s\,T_I}\,\frac{K_c}{v}\,\theta_{near}\right) \qquad (F6)$$

Une fois cette position angulaire cible $\hat{\delta}_{SW}$ déterminée, le modèle mathématique permet de déterminer le couple cible $\hat{\Gamma}_d$ que le conducteur devrait exercer sur le volant de direction si son niveau d'attention était élevé, et cela en tenant compte d'un temps de réaction neuromusculaire Tn et de la raideur de conduite du conducteur.

Plus particulièrement, ce couple cible $\hat{\Gamma}_d$ est déterminé, au sein du bloc RN mentionné précédemment, en fonction d'un couple de réaction du conducteur $\Gamma_R$, égal ici au produit de :

- la différence $\hat{\delta}_{SW}$ - $\delta_d$ entre la position angulaire cible $\hat{\delta}_{SW}$ dans laquelle le volant de direction devrait être placé si le niveau d'attention du conducteur était élevé et la position effective $\delta_d$ de ce volant, multipliée par
- une constante de raideur neuromusculaire $K_t$ du conducteur (bloc REA, figure 5).

Cette constante de raideur neuromusculaire $K_t$ est représentative de la raideur de conduite du conducteur. Cette constante de raideur neuromusculaire $K_t$ est plus grande pour une conduite très réactive, pour laquelle le conducteur corrige la position angulaire du volant en exerçant sur celui-ci un couple important, que pour une conduite souple, pour laquelle le conducteur corrige progressivement cette position angulaire en exerçant un couple modéré sur le volant.

Le temps de réaction neuromusculaire Tn du conducteur est représentatif d'un temps que mettrait le conducteur pour traduire son intention de positionner le volant à ladite position angulaire cible $\hat{\delta}_{SW}$, sous forme d'une action mécanique, en l'occurrence d'un couple, exercée sur ce volant.

Pour prendre en compte ce temps de réaction neuromusculaire Tn du conducteur, la détermination de ce couple cible $\hat{\Gamma}_d$ comprend ici une étape finale de filtrage passe-bas (bloc REN, figure 5), au moyen d'un filtre passe-bas du premier ordre dont la fonction de transfert en représentation de Laplace est :

$$\frac{1}{1+s\,Tn} \qquad (F7)$$

En variante, un filtre d'un autre type, par exemple du deuxième ordre, peut être utilisé à cette fin. Cette étape de filtrage pourrait également être réalisée en début, ou à un stade intermédiaire, de la détermination de ce couple cible $\hat{\Gamma}_d$, plutôt qu'à la fin de cette détermination.

Comme il est d'autant plus difficile d'écarter le volant de direction de sa position de repos que la vitesse v du véhicule est élevée, le couple cible $\hat{\Gamma}_d$ que le conducteur devrait exercer sur le volant de direction si son niveau d'attention était élevé est déterminé par ailleurs en fonction d'un couple de raideur de la direction du véhicule $\Gamma_C$, d'autant plus grand que cette vitesse v est élevée.

Ce couple de raideur de la direction du véhicule $\Gamma_C$ est déterminé également en fonction de ladite position angulaire cible $\hat{\delta}_{SW}$. Plus précisément, il est égal au produit de la vitesse v du véhicule, multipliée par cette position angulaire cible $\hat{\delta}_{SW}$ et par une constante de raideur de la direction $K_r$ (bloc COL, figure 5).

Ici, le couple cible $\hat{\Gamma}_d$ est déterminé par ailleurs en fonction de la différence entre le couple de réaction du conducteur $\Gamma_C$ et le couple de rappel $\Gamma_s$ du volant de direction. Cela permet notamment de prendre en compte que le conducteur du véhicule n'exercerait pas de couple sur ce volant de direction dans un cas où le volant aurait tendance spontanément, sous l'effet de ce couple de rappel $\Gamma_s$, à adopter une position angulaire proche de la position angulaire cible $\hat{\delta}_{SW}$.

Finalement, le couple cible $\hat{\Gamma}_d$ que le conducteur devrait exercer sur le volant de direction si son niveau d'attention était élevé est déterminé ici, en représentation de Laplace, conformément à la formule F8 suivante :

$$\hat{\Gamma}_d = \frac{1}{1+s\,Tn}\left(K_t[\hat{\delta}_{SW} - \delta_d] + K_r v\,\hat{\delta}_{SW} - \Gamma_s\right) \qquad (F8)$$

Les paramètres de ce modèle mathématique représentatif du comportement neuromusculaire du conducteur comprennent donc :

- le gain d'anticipation $K_p$,
- le gain de compensation $K_c$,
- la constante de temps de compensation $T_I$,
- le retard au diagnostic visuel $\tau_p$ du conducteur,

- la constante de raideur neuromusculaire $K_t$ du conducteur,
- la constante de raideur de la colonne de direction $K_r$, et
- le temps de réaction neuromusculaire Tn du conducteur.

Ces paramètres sont rassemblés sous la forme du vecteur de paramètres $\Pi$ suivant :

$$\Pi = \begin{bmatrix} K_p , & K_c , & T_I, \tau_p, K_t, K_r, Tn \end{bmatrix}^T \qquad (F9)$$

Chacun de ces paramètres est identifié, c'est-à-dire qu'une valeur de ce paramètre est déterminée, au cours de la phase d'identification PHI (figure 4) mentionnée ci-dessus.

Cette phase d'identification PHI correspond ici à une phase d'apprentissage réalisée en début de phase de roulage. Cette phase d'identification est par exemple réalisée à nouveau à chaque fois qu'un conducteur prend place dans le véhicule et commence à le conduire (on estime en effet qu'à ce moment, l'attention du conducteur est maximum).

La phase d'identification PHI comprend l'acquisition ACQ, à une pluralité d'instants successifs, d'une pluralité correspondante :

- de valeurs de la position angulaire effective $\delta_d$ de ce volant de direction,
- de valeurs d'un couple effectivement exercé $\Gamma_d$ par le conducteur sur le volant de direction du véhicule,
- de valeurs de la vitesse v du véhicule, et
- d'images de l'environnement dans lequel évolue le véhicule.

Cette acquisition ACQ est réalisée ici pendant une durée prédéterminée, typiquement inférieure à une minute.

Les valeurs de ce couple effectivement exercé $\Gamma_d$ sont acquises au moyen d'un capteur équipant le volant ou la colonne de direction du véhicule.

Des valeurs successives du vecteur d'entrée U du modèle mathématique qui est représentatif du comportement neuromusculaire du conducteur sont alors déterminées, sur la base notamment de ces images et de ces valeurs acquises de la position angulaire effective $\delta_d$ du volant de direction et de la vitesse v du véhicule.

L'identification ID des paramètres de ce modèle mathématique, en l'occurrence ici l'identification du vecteur de paramètres $\Pi$, est basée sur une comparaison entre :

- les valeurs acquises de la position angulaire effective $\delta_d$ du volant direction et du couple effectivement exercé $\Gamma_d$ sur ce dernier, et
- des valeurs de la position angulaire cible $\hat{\delta}_{SW}$ et du couple cible $\hat{\Gamma}_d$ qui serait exercé sur ce volant, déterminées au moyen dudit modèle mathématique, en fonction desdites valeurs de son vecteur d'entrée U.

Cette identification ID est réalisée par exemple par une méthode basée sur la théorie statistique de l'estimation, telle qu'une méthode dite à prédiction d'erreur (ou PEM, selon l'acronyme anglo-saxon de « Prédiction Error Method »).

En variante, cette identification peut par exemple être réalisée par une méthode dite des moindres carrés d'innovation, telle qu'une méthode basée sur un filtre de Kalmann étendu.

Ici, les paramètres ainsi identifiés du modèle mathématique qui est représentatif du comportement neuromusculaire du conducteur sont ensuite utilisés lors de la phase de diagnostic PHD au cours de laquelle on détermine la valeur préliminaire flag1(k) du niveau d'attention du conducteur (figure 4).

Préférentiellement, cette phase de diagnostic PHD comprend les étapes suivantes :

a) le calculateur acquiert une position effective d'un organe de pilotage du véhicule automobile,

b) le calculateur acquiert au moins une donnée relative à un environnement dans lequel évolue ledit véhicule automobile,

c1) le calculateur détermine, en fonction de ladite donnée relative à l'environnement dans lequel évolue le véhicule automobile, une position cible dans laquelle l'organe de pilotage devrait être placé si le niveau d'attention du conducteur était élevé,

c2) le calculateur détermine une grandeur de rappel de l'organe de pilotage vers une position de repos, en fonction au moins de la position effective de cet organe de pilotage,

c3) le calculateur détermine une grandeur cible, représentative d'une action que le conducteur devrait effectuer sur ledit organe de pilotage si le niveau d'attention du conducteur était élevé, en fonction de la position cible, de la position effective de l'organe de pilotage du véhicule, et de ladite grandeur de rappel de l'organe de pilotage,

d) le calculateur acquiert une grandeur effective représentative d'une action de commande du conducteur sur ledit organe de pilotage,

e) le calculateur compare ladite grandeur effective et ladite grandeur cible, et

f) le calculateur détermine ladite valeur préliminaire du niveau d'attention du conducteur en fonction du résultat de la comparaison réalisée à l'étape e).

Plus précisément, ici, lesdites positions et grandeur cibles $\hat{\delta}_{SW}$, $\Gamma_d$, déterminées respectivement aux étapes c1) et c3), sont déterminées au moyen du modèle mathématique qui est représentatif du comportement neuromusculaire du conducteur, décrit ci-dessus.

Pendant cette phase de diagnostic PHD, les valeurs des coordonnées du vecteur de paramètres $\Pi$ restent fixées et égales à celles déterminées précédemment lors de la phase d'identification PHI.

On détermine à chaque instant les valeurs des coordonnées du vecteur d'entrée U dudit modèle mathématique (étapes a), b), et c2)), de la même manière que lors de la phase d'identification PHI décrite ci-dessus.

On en déduit à chaque instant les valeurs des coordonnées du vecteur de sortie Y de ce modèle mathématique, en particulier la valeur $\hat{\Gamma}_d(k)$ du couple cible $\hat{\Gamma}_d$ que le conducteur devrait exercer sur le volant de direction du véhicule si son niveau d'attention était élevé (étapes c1) et c3)).

On acquiert par ailleurs, à chacun de ces instants, la valeur $\hat{\Gamma}_d(k)$ du couple effectivement exercé $\Gamma_d$ par le conducteur sur le volant de direction du véhicule, au cours de l'étape d).

A l'étape e), on compare, à chacun de ces instants, les valeurs $\Gamma_d(k)$ et $\hat{\Gamma}_d(k)$ correspondantes, respectivement du couple effectivement exercé $\Gamma_d$ par le conducteur sur le volant de direction du véhicule, et du couple cible $\hat{\Gamma}_d$ que le conducteur devrait exercer sur le volant de direction si son niveau d'attention était élevé. Plus précisément, ici, on calcule une différence TPE(k) entre ce couple effectivement exercé $\Gamma_d$ et ce couple cible $\hat{\Gamma}_d$ :

$$\mathrm{TPE(k)} = \Gamma_{\mathrm{d}}(k) - \hat{\Gamma}_{\mathrm{d}}(k) \qquad \text{(F10)}$$

Au cours de l'étape f) suivante, le calculateur détermine la valeur préliminaire flag1 (k) du niveau d'attention du conducteur en fonction notamment de cette différence TPE(k).

Plus précisément, l'exécution des étapes a) à e) est répétée en continu par le calculateur, à chaque instant, au moins pendant ledit premier intervalle temporel, et, au cours de l'étape f) :

- le calculateur sélectionne les différences TPE(j) calculées à chaque exécution de l'étape e), pendant le premier intervalle temporel,
- le calculateur calcule une valeur efficace de référence $VE_L(k)$ des différences TPE(j) sélectionnées, et
- le calculateur déduit la valeur préliminaire flag1(k) du niveau d'attention du conducteur en fonction de ladite valeur efficace de référence $VE_L(k)$.

De plus, ici, au cours de l'étape f),

- le calculateur sélectionne les différences TPE(j) calculées à chaque exécution de l'étape e), pendant un troisième intervalle temporel plus court que le premier intervalle temporel et inclus dans celui-ci,
- le calculateur calcule une valeur efficace à temps court VEc(k) des différences TPE(j) sélectionnées, et
- le calculateur déduit la valeur préliminaire flag1(k) du niveau d'attention du conducteur en fonction en outre de ladite valeur efficace à temps court $VE_C(k)$.

Une constatation, faisant partie de la présente invention, est qu'une détermination d'un niveau d'attention du conducteur basée, comme c'est le cas ici, sur ces valeurs efficaces à temps court $VE_C(k)$ et de référence $VE_L(k)$ est particulièrement efficace et fiable. Ici, le premier intervalle temporel correspond à une fenêtre temporelle glissante, de durée longue, s'étendant depuis un instant antérieur jusqu'à l'instant, d'indice k, pour lequel est calculée cette valeur efficace de référence $VE_L(k)$.

Plus précisément, ce premier intervalle temporel comprend un nombre $N_L$ desdits instants, et sa durée est égale à $N_L \Delta t$. Cette durée est typiquement comprise entre 20 et 300 secondes. Ici, par exemple, elle est égale à 30 secondes.

La valeur efficace de référence $VE_L(k)$ est ainsi calculée conformément à la formule F11 suivante :

$$VE_L(k) = \sqrt{\frac{1}{N_L\, \Delta t} \sum_{j=k\text{-}N_L+1}^{k} TPE^2(j)} \qquad \text{(F11)}$$

Ici, le troisième intervalle temporel correspond aussi à une fenêtre temporelle glissante, mais de durée plus courte que celle du premier intervalle temporel. Cette fenêtre temporelle glissante s'étend là encore depuis un instant antérieur jusqu'à l'instant, d'indice k, pour lequel est calculée la valeur efficace à temps court $VE_C(k)$.

Plus précisément, ce troisième intervalle temporel comprend un nombre Nc desdits instants, et sa durée est égale à Nc Δt. Cette durée est typiquement comprise entre 0,5 et 20 secondes. Ici, par exemple, elle est égale à 15 secondes.

La valeur efficace à temps court $VE_C(k)$ est ainsi calculée conformément à la formule F12 suivante :

$$VE_C(k) = \sqrt{\frac{1}{Nc\,\Delta t} \sum_{j=k-Nc+1}^{k} TPE^2(j)} \qquad (F12)$$

Les valeurs efficaces à temps court $VE_C(k)$ et de référence $VE_L(k)$ sont calculées ici lors d'une première sous-étape CI de l'étape f) (voir figure 4).

Par ailleurs, au cours de cette sous-étape CI, la différence TPE(k) et/ou les valeurs efficaces à temps court $VE_C(k)$ ou de référence $VE_L(k)$ ainsi calculées sont enregistrées dans la mémoire vive MEM (voir figure 4), ce qui permettra au besoin de recalculer ultérieurement ces valeurs efficaces.

Au cours de cette sous-étape CI, on calcule également une valeur $VE_R(k)$ d'un deuxième indicateur $VE_R$, en fonction des valeurs efficaces à temps court $VE_C(k)$ et de référence $VE_L(k)$.

La valeur $VE_R(k)$ de ce deuxième indicateur $VE_R$ est ici égale au logarithme népérien ln du rapport de la valeur efficace à temps court VEc(k) divisée par la valeur efficace de référence $VE_L(k)$ :

$$VE_R(k) = \ln(VE_C(k)/VE_L(k)) \qquad (F13)$$

Ce deuxième indicateur $VE_R$ peut présenter des variations rapides au cours du temps correspondant à des effets parasites. Aussi, pour rendre la détermination du niveau d'attention du conducteur plus robuste, l'évolution temporelle de ce deuxième indicateur $VE_R$ est filtrée au moyen d'un filtre (ici un filtre passe-bas) pour obtenir un deuxième indicateur filtré IDF1. Ce filtrage est réalisé lors de la sous-étape suivante FI1, au cours de laquelle une valeur IDF1(k) de ce deuxième indicateur filtré IDF1 est calculée.

Le filtre passe-bas utilisé pour cela est ici un filtre passe-bas d'ordre un, dont la fonction de transfert en représentation de Laplace est :

$$\frac{1}{1 + s\,T_{IND}} \qquad (F14)$$

La constante de temps $T_{IND}$ de ce filtre passe-bas est préférentiellement inférieure à la durée du premier intervalle temporel. Ici, par exemple, cette constante de temps $T_{IND}$ est égale à 1 seconde.

Lors de la sous-étape DNA suivante, on détermine la valeur préliminaire du niveau d'attention du conducteur en comparant cette valeur IDF1(k) du deuxième indicateur filtré IDF1 à un seuil de détection α prédéterminé.

Lorsque cette valeur IDF1(k) est inférieure au seuil de détection α, on détermine que le conducteur est attentif. La valeur préliminaire flag1(k) du niveau d'attention du conducteur est alors rendue égale à une troisième valeur, ici égale à 0. Cette valeur préliminaire flag1(k) du niveau d'attention du conducteur correspond ici à la valeur d'une variable annexe flag1, et est par exemple enregistrée dans la mémoire vive MEM du calculateur en attendant d'être validée à l'étape iii) suivante.

Au contraire, lorsque cette valeur IDF1(k) est supérieure au seuil de détection α, on détermine que le conducteur est distrait ou dans un état de fatigue. La valeur préliminaire flag1(k) du niveau d'attention du conducteur est alors rendue égale à une quatrième valeur différente de la troisième, et égale ici à 1.

Ici on détermine donc :

- soit une valeur préliminaire du niveau d'attention du conducteur correspondant au fait qu'il est attentif,

- soit une autre valeur préliminaire du niveau d'attention du conducteur correspondant au fait qu'il est distrait ou dans un état de fatigue.

La valeur du seuil de détection α prédéterminée peut par exemple être ajustée, à l'issu d'essais de conduite, pour permettre en pratique une discrimination efficace entre ces deux niveaux d'attention. Préférentiellement, la valeur du seuil de détection $\alpha$ prédéterminé est comprise entre ln(1) et ln(100). Ici, par exemple, elle est égale à ln(1,5).

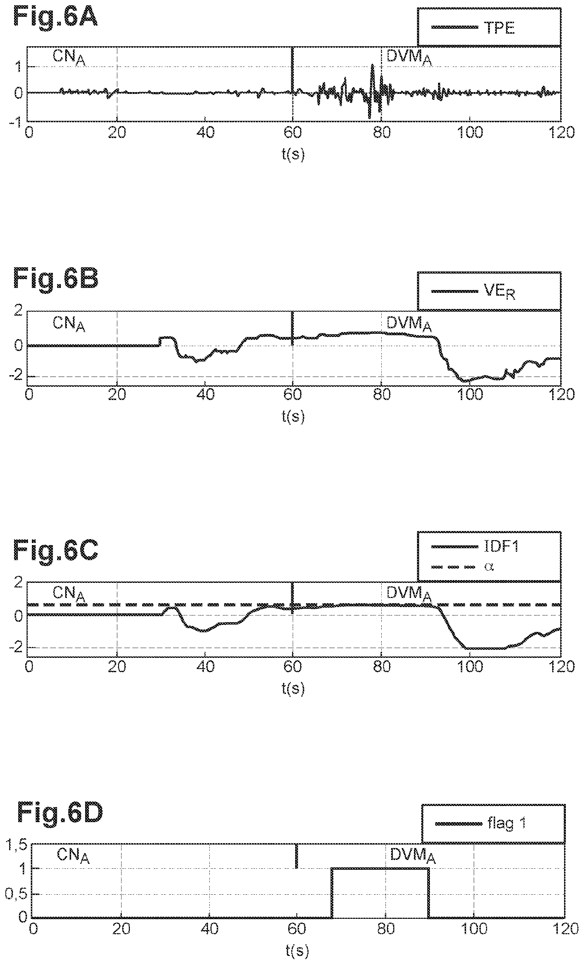

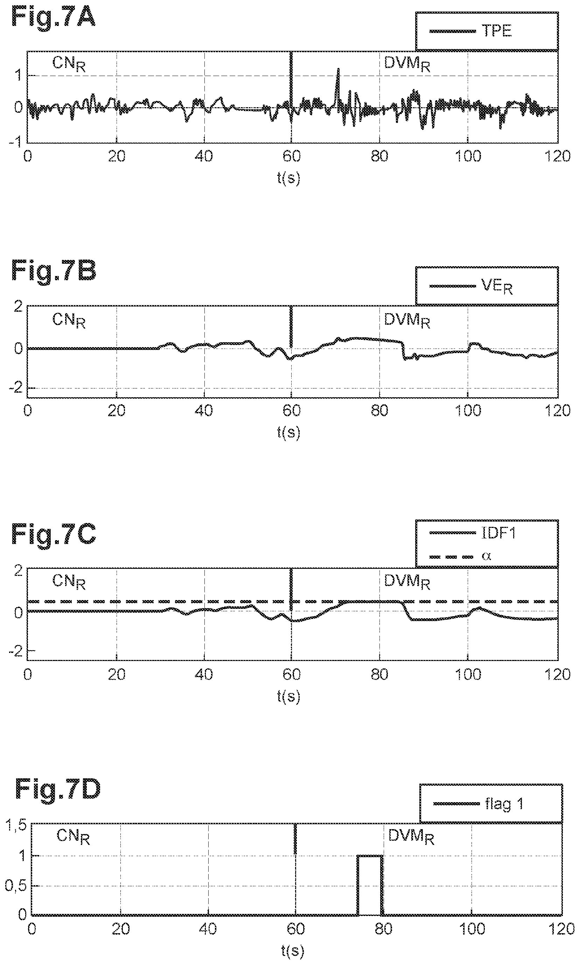

Sur les figures 6A à 6D et 7A à 7D, on a représenté l'évolution au cours du temps t de différentes grandeurs évaluées conformément au procédé de détermination décrit ci-dessus, au cours de l'étape i), pour des essais de conduite réalisés par un conducteur sur un simulateur de conduite. Ce conducteur est là encore un conducteur réel. Dans le cas des figures 6A à 6D, l'essai réalisé correspond à un trajet sur une route peu sinueuse, par exemple sur autoroute (plutôt rectiligne, sur laquelle le véhicule roule à environ 130 km/h), tandis que dans le cas des figures 7A à 7D il correspond à un trajet sur une route sinueuse, par exemple une route à deux voies de circulation en sens opposés (sur laquelle le véhicule roule à environ 90 km/h).

Pour chacun de ces deux essais, pendant une première partie $CN_A$, $CN_R$ de l'essai, des instants t=0 à t=60 secondes, le conducteur est attentif. Pendant une deuxième partie $DVM_A$, $DVM_R$ de l'essai, des instants t=60 secondes à t=120 secondes, le conducteur est distrait ou dans un état de fatigue.

Sur les figures 6A à 6D comme sur les figures 7A à 7D, on a respectivement représenté, en fonction du temps t, indiqué en secondes :

- la différence TPE(k) entre le couple effectivement exercé $\Gamma_d$ par le conducteur sur le volant de direction et le couple cible $\hat{\Gamma}_d$ qu'il devrait exercer sur celui-ci si son niveau d'attention était élevé (figures 6A et 7A),
- la valeur $VE_R(k)$ du deuxième indicateur $VE_R$ obtenu à partir de cette différence TPE(k) (figures 6B et 7B),
- la valeur IDF1(k) du deuxième indicateur filtré IDF1 correspondant et la valeur, constante, du seuil de détection $\alpha$ prédéterminé (figures 6C et 7C), et
- la valeur préliminaire flag1 (k) du niveau d'attention du conducteur, c'est-à-dire la valeur de la variable annexe flag1 (figures 6D et 7D).

On constate sur les figures 6A et 7A que cette différence TPE(k) présente des variations temporelles plus grandes lorsque le conducteur est distrait ou dans un état de fatigue (deuxièmes parties $DVM_A$, $DVM_R$ de ces essais) que lorsqu'il est attentif (premières parties $CN_A$, $CN_R$ de ces essais), et cela aussi bien pour une conduite sur une route peu sinueuse que sur une route sinueuse. On constate également que, lorsque le conducteur est attentif, ces variations sont plus importantes pour une conduite sur une route sinueuse que sur une route peu sinueuse.

On constate également sur les figures 6D et 7D, aussi bien pour l'essai de conduite sur route peu sinueuse que pour l'essai de conduite sur route sinueuse que, lorsque le conducteur est attentif, ce procédé permet effectivement de déterminer que le conducteur est attentif. En effet, pendant les premières parties $CN_A$, $CN_R$ de ces essais, la valeur de la variable annexe flag1 est égale à 0.

On constate également, aussi bien pour l'essai de conduite sur route peu sinueuse que pour l'essai de conduite sur route sinueuse, que, lorsque le conducteur est distrait ou dans un état de fatigue, ce procédé permet effectivement de déterminer, au moins de manière transitoire, que le conducteur est distrait ou dans un état de fatigue. En effet, pendant les deuxièmes parties $DVM_A$, $DVM_R$ de ces essais, la valeur de la variable annexe flag1 est égale à 1 pendant au moins une partie de la période pendant laquelle le conducteur est distrait ou dans un état de fatigue.

On rappelle qu'au cours de l'étape i), on calcule la valeur efficace de référence sur une durée longue (plus précisément sur la durée $N_L.\Delta t$ du premier intervalle temporel), pour s'en servir ensuite de référence à laquelle comparer la valeur efficace calculée sur un temps court. Cela rend la détermination de la valeur préliminaire du niveau d'attention du conducteur avantageusement fiable, aussi bien sur une route sinueuse que sur une route peu sinueuse, comme illustré par les essais décrits ci-dessus.

En effet, comme la valeur efficace de référence est recalculée en continu, c'est à une valeur adaptée au type de route sur laquelle circule le véhicule automobile (et adaptée au conducteur de ce véhicule) que l'on compare la valeur efficace à temps court, calculée sur une durée plus courte.

On notera toutefois que cette valeur efficace de référence est calculée en fonction de grandeurs acquises au cours du premier intervalle temporel.

Ainsi, après un changement du type de route sur laquelle circule le véhicule automobile, une durée supérieure ou égale à celle de ce premier intervalle temporel est nécessaire pour que cette valeur efficace de référence s'adapte au nouveau type de route sur laquelle circule le véhicule automobile.

Tant que la valeur efficace de référence n'est pas adaptée à ce nouveau type de route, l'étape i) peut conduire à une valeur préliminaire du niveau d'attention du conducteur erronée, indiquant que celui-ci est distrait ou dans un état de fatigue, alors qu'il est attentif.

On rappelle qu'ici, pour améliorer la fiabilité du procédé de détermination du niveau d'attention du conducteur du véhicule automobile, on valide au cours de l'étape iii) ladite valeur préliminaire du niveau d'attention du conducteur (déterminée au cours de l'étape i)) seulement s'il résulte de l'étape ii) que le type de route n'a pas changé au cours de plusieurs intervalles temporels précédents.

Plus précisément, lesdits plusieurs intervalles temporels précédents forment ici le deuxième intervalle temporel mentionné précédemment (lors de la description de l'étape ii)). On rappelle aussi que ce deuxième intervalle temporel débute dès qu'un changement de type de route est déterminé (et s'étend jusqu'à un instant ultérieur).

Pour éviter, suite à un changement de type de route, de déterminer un niveau d'attention du conducteur erroné, il est préférable, comme c'est le cas ici, que ce deuxième intervalle temporel soit au moins aussi long que le premier intervalle temporel au cours duquel on acquiert ladite grandeur effective servant à déterminer la valeur préliminaire du niveau d'attention du conducteur.

Ici, la durée du deuxième intervalle temporel est égale à celle du premier intervalle temporel (en l'occurrence égale à $N_L \Delta t$).

Conformément à cette disposition, ici :

- lorsqu'il résulte de l'étape ii) que le type de route sur laquelle circule le véhicule automobile n'a pas changé pendant la durée du deuxième intervalle temporel précédent, on valide la valeur préliminaire du niveau d'attention du conducteur, c'est-à-dire que le niveau d'attention du conducteur est égal à cette valeur préliminaire ; et
- lorsqu'il résulte au contraire de l'étape ii) que le type de route sur laquelle circule le véhicule automobile a changé pendant la durée du deuxième intervalle temporel précédent, on considère que le niveau d'attention du conducteur est celui pour lequel le conducteur est attentif.

Pour cela, on détermine ici une valeur flag(k) d'une variable « flag » représentative du niveau d'attention du conducteur du véhicule en appliquant l'opérateur de logique booléenne « ET » à la variable annexe flag1 et à l'indicateur flag2 relatif au fait que le type de route sur laquelle roule le véhicule automobile a ou non récemment changé :

$$\text{flag} = \text{flag1 ET flag2} \qquad \text{(F15)}$$

c'est à dire :

$$si \ \text{flag1(k)}=1 \ \text{ET flag2(k)}=1 \ alors \quad \text{flag(k)} = 1 \qquad \text{(F16)}$$

$$si \ \text{flag1(k)}=0 \ \text{ET flag2(k)}=1 \ alors \quad \text{flag(k)} = 0 \qquad \text{(F17)}$$

$$si \ \text{flag1(k)}=1 \ \text{ET flag2(k)}=0 \ alors \quad \text{flag(k)} = 0 \qquad \text{(F18)}$$

$$si \ \text{flag1(k)}=0 \ \text{ET flag2(k)}=0 \ alors \quad \text{flag(k)} = 0 \qquad \text{(F19)}$$

Une valeur flag(k)=0 correspond à un conducteur attentif, et une valeur flag(k)=1 correspond à un conducteur distrait ou dans un état de fatigue.

On évite ainsi avantageusement de déterminer de manière erronée, à cause d'un changement de type de route, que le conducteur est distrait ou dans un état de fatigue, alors qu'il est attentif.

Dans le mode de réalisation de la méthode de stimulation de l'attention d'un conducteur d'un véhicule automobile décrit ici, dès que le calculateur détermine que le conducteur est distrait ou dans un état de fatigue (flag(k)=1), il déclenche un signal d'avertissement à destination du conducteur (étape STIM, figure 1).

Ce signal d'avertissement peut correspondre par exemple à un signal sonore ou lumineux signalant au conducteur qu'il n'est pas attentif. Ce signal d'avertissement peut aussi lui être transmis sous forme mécanique, par exemple sous forme d'une vibration du fauteuil sur lequel il est assis, ou d'une vibration du volant de direction du véhicule.

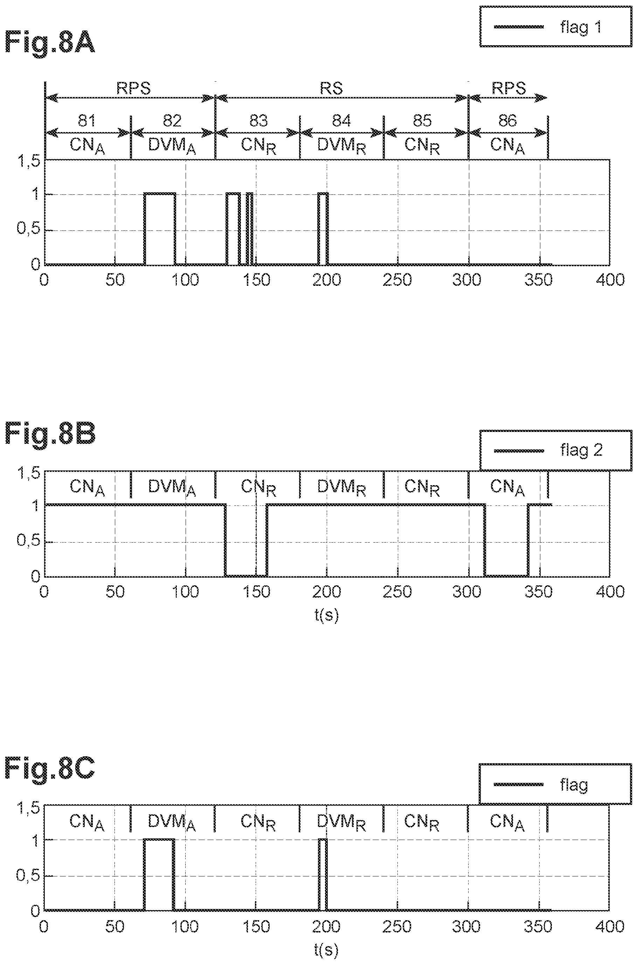

Les figures 8A à 8C représentent schématiquement l'évolution au cours du temps de la variable annexe flag1 (figure 8A), de l'indicateur flag2 (figure 8B), et de la variable « flag » représentative du niveau d'attention du conducteur du véhicule automobile (figure 8C), évaluées au cours du procédé de détermination de la figure 1, pour un essai de conduite réalisé par un conducteur sur un simulateur de conduite. Ce conducteur est là encore un conducteur réel.

Cet essai comprend six parties 81 à 86 successives, de chacune 60 secondes.

Les parties 81, 82 et 86 de cet essai correspondent à une conduite sur une route peu sinueuse RPS.

Les parties 83 à 85 de cet essai correspondent à une conduite sur une route sinueuse RS.

Pendant les parties 81, 83, 85 et 86 de cet essai, le conducteur est attentif.

Pendant les parties 82 et 84 de cet essai, le conducteur est distrait ou dans un état de fatigue.

On constate sur la figure 8A que lorsque le conducteur est distrait ou dans un fatigue, cela est bien détecté lors de l'étape i), puisque la valeur préliminaire flag1(k) prend bien une valeur égale à 1 (au moins de manière transitoire) au cours des parties 82 et 84 de cet essai.

Mais on constate également sur cette figure que ladite valeur préliminaire flag1(k) est déterminée de manière erronée au cours de la partie 83 de cet essai, puisqu'elle indique que le conducteur est distrait ou dans un état de fatigue alors qu'il est attentif. Cette erreur est causée par le passage d'une conduite sur route peu sinueuse RPS à une conduite sur route sinueuse RS entre les parties 82 et 83 de cet essai, à l'instant t=120 secondes.

Cet essai illustre par ailleurs que cette valeur préliminaire flag1(k) est susceptible d'être erronée suite à un changement de type de route seulement pendant une durée égale à celle du premier intervalle temporel susmentionné, c'est-à-dire ici seulement pendant les 30 secondes suivant le changement de type de route. En effet, on constate bien, pour cet essai, que c'est seulement pendant les 30 premières secondes de la partie 83 que ladite valeur préliminaire flag1(k) est déterminée de manière erronée.

On constate sur la figure 8B que suite au changement de type de route advenant lors du passage de la partie 82 à la partie 83 de cet essai (et lors du passage de la partie 85 à la partie 86 de cet essai), la valeur de l'indicateur flag2 devient égale à 0 pendant une durée égale à celle dudit premier intervalle.

Grâce à la validation réalisée à l'étape iii) au moyen de cet indicateur flag2, le niveau d'attention du conducteur finalement déterminé est conforme au niveau d'attention réel du conducteur pendant toute la durée de cet essai, comme on peut le constater sur la figure 8C.

## Revendications

1. Procédé de détermination d'un niveau d'attention d'un conducteur d'un véhicule automobile, comprenant les étapes suivantes :

    i) on acquiert, au cours d'un premier intervalle temporel, plusieurs valeurs ($\Gamma_d(k)$) successives d'une grandeur effective ($\Gamma_d$) représentative d'une action de commande du conducteur du véhicule automobile sur un organe de pilotage de ce véhicule,
    ii) on détermine à intervalles temporels successifs, un type de route (TR(k)) sur laquelle circule le véhicule automobile, et on vérifie si ledit type de route (TR(k)) a changé depuis l'intervalle précédent, et
    iii) on détermine le niveau d'attention du conducteur en fonction desdites valeurs ($\Gamma_d(k)$) acquises, et en fonction également du résultat de la vérification d'un changement de type de route (DTR(k)),
    dans lequel, préalablement à l'étape iii) :

        - on détermine, à plusieurs instants dudit premier intervalle temporel, une grandeur cible ($\hat{\Gamma}_d$) représentative d'une action que le conducteur devrait effectuer sur ledit organe de pilotage si le niveau d'attention du conducteur était élevé,
        - on compare, à chacun de ces instants, ladite grandeur cible ($\hat{\Gamma}_d$) et ladite grandeur effective ($\Gamma_d$) en calculant une différence (TPE(k)) entre ladite grandeur effective ($\Gamma_d$) et ladite grandeur cible ($\hat{\Gamma}_d$),
        - on calcule une valeur efficace de référence ($VE_L(k)$) desdites différences (TPE(k)) calculées pendant le premier intervalle temporel,
        - on sélectionne les différences calculées pendant un deuxième intervalle temporel plus court que le premier intervalle temporel et inclus dans celui-ci,
        - on calcule une valeur efficace à temps court (VEc(k)) desdites différences (TPE(k)) sélectionnées,
        - on compare ladite valeur efficace à temps court (VEc(k)) à ladite valeur efficace de référence ($VE_L(k)$), et
        et dans lequel, à l'étape iii), on détermine le niveau d'attention du conducteur en fonction du résultat de la comparaison de ladite valeur efficace à temps court (VEc(k)) à ladite valeur efficace de référence ($VE_L(k)$).

2. Procédé selon la revendication précédente, dans lequel, préalablement à l'étape iii), on calcule une valeur préliminaire (flag1(k)) du niveau d'attention puis on valide au cours de l'étape iii) ladite valeur préliminaire (flag1(k)) seulement s'il résulte de l'étape ii) que le type de route (TR(k)) n'a pas changé au cours de plusieurs intervalles temporels précédents.

3. Procédé selon la revendication précédente, dans lequel lesdits plusieurs intervalles temporels précédents forment ensemble un troisième intervalle temporel qui est au moins aussi long que ledit premier intervalle temporel.

4. Procédé selon l'une des revendications précédentes, dans lequel, au cours de l'étape ii) :

    - on acquiert une valeur (ID2(k)) représentative de la sinuosité de la route sur laquelle circule le véhicule automobile, et

- on détermine le type de route (TR(k)) sur laquelle circule le véhicule automobile en fonction de cette valeur (ID2(k)) représentative de la sinuosité de ladite route.

5. Procédé selon la revendication précédente, dans lequel, à l'étape ii), on acquiert une image d'une portion de la route sur laquelle circule le véhicule automobile et on détermine une valeur de courbure (p(k)) de cette portion de la route par analyse d'image, et dans lequel ladite valeur (ID2(k)) représentative de la sinuosité de la route est calculée en fonction d'au moins ladite valeur de courbure ($\rho$(k)).

6. Procédé selon l'une des revendications précédentes, dans lequel ladite grandeur effective ($\Gamma_d$) est un couple effectivement exercé ($\Gamma_d$) par le conducteur sur un volant de direction du véhicule.

7. Procédé selon l'une des revendications 1 à 5, dans lequel ladite grandeur effective est une position angulaire effective ($\delta_d$) d'un volant de direction du véhicule.

8. Méthode de stimulation de l'attention d'un conducteur d'un véhicule automobile, au cours de laquelle :

- on détermine un niveau d'attention du conducteur du véhicule par l'exécution d'un procédé conforme à l'une des revendications précédentes, et
- on déclenche un signal d'avertissement à destination du conducteur, lorsque le niveau d'attention précédemment déterminé est inférieur à un seuil d'attention prédéterminé.

## Patentansprüche

1. Verfahren zur Bestimmung eines Aufmerksamkeitsgrades eines Fahrers eines Kraftfahrzeugs, das die folgenden Schritte beinhaltet:

i) Erfassen, während eines ersten Zeitintervalls, mehrerer aufeinanderfolgender Werte ($\Gamma_d$(k)) einer tatsächlichen Größe ($\Gamma_d$), die für einen Bedienvorgang des Fahrers des Kraftfahrzeugs an einem Steuerelement dieses Fahrzeugs repräsentativ ist,
ii) Bestimmen, in aufeinanderfolgenden Zeitintervallen, einer Art der Straße (TR(k)), auf der das Kraftfahrzeug fährt, und Prüfen, ob sich die Straßenart (TR(k)) seit dem vorhergehenden Intervall geändert hat, und
iii) Bestimmen des Aufmerksamkeitsgrades des Fahrers in Abhängigkeit von diesen erfassten Werten ($\Gamma_d$(k)) und auch in Abhängigkeit von dem Ergebnis der Prüfung einer Änderung der Straßenart (DTR(k)), wobei vor dem Schritt iii) Folgendes erfolgt:

- Bestimmen, zu mehreren Zeitpunkten des ersten Zeitintervalls, einer Zielgröße ($\hat{\Gamma}_d$), die für einen Vorgang, den der Fahrer an dem Steuerelement vornehmen sollte, falls der Aufmerksamkeitsgrad des Fahrers hoch wäre, repräsentativ ist,
- Vergleichen, zu jedem dieser Zeitpunkte, der Zielgröße ($\hat{\Gamma}_d$) und der tatsächlichen Größe ($\Gamma_d$), indem eine Differenz (TPE(k)) zwischen der tatsächlichen Größe ($\Gamma_d$) und der Zielgröße ($\hat{\Gamma}_d$) berechnet wird,
- Berechnen eines Referenz-Effektivwerts (VE$_L$(k)) der Differenzen (TPE(k)), die während des ersten Zeitintervalls berechnet werden,
- Auswählen der Differenzen, die während eines zweiten Zeitintervalls, das kürzer als das erste Zeitintervall ist und in diesem eingeschlossen ist, berechnet werden,
- Berechnen eines Effektivwerts kurzer Dauer (VE$_C$(k)) der ausgewählten Differenzen (TPE(k)),
- Vergleichen des Effektivwerts kurzer Dauer (VE$_C$(k)) mit dem Referenz-Effektivwert (VE$_L$(k)),
und wobei in Schritt iii) der Aufmerksamkeitsgrad des Fahrers in Abhängigkeit von dem Ergebnis des Vergleichs des Effektivwerts kurzer Dauer (VE$_C$(k)) mit dem Referenz-Effektivwert (VE$_L$(k)) bestimmt wird.

2. Verfahren nach dem vorhergehenden Anspruch, wobei vor dem Schritt iii) ein vorläufiger Wert (flag1(k)) des Aufmerksamkeitsgrades berechnet wird und anschließend während des Schritts iii) der vorläufige Wert (flag1(k)) nur dann bestätigt wird, wenn sich aus dem Schritt ii) ergibt, dass sich die Straßenart (TR(k)) während mehrerer vorhergehender Zeitintervalle nicht geändert hat.

3. Verfahren nach dem vorhergehenden Anspruch, wobei die mehreren vorhergehenden Zeitintervalle gemeinsam ein drittes Zeitintervall bilden, das mindestens so lang wie das erste Zeitintervall ist.

**4.** Verfahren nach einem der vorhergehenden Ansprüche, wobei während des Schritts ii) Folgendes erfolgt:

- Erfassen eines Werts (ID2(k)), der für die Kurvigkeit der Straße, auf der das Kraftfahrzeug fährt, repräsentativ ist, und
- Bestimmen der Straßenart (TR(k)), auf der das Kraftfahrzeug fährt, in Abhängigkeit von diesem für die Kurvigkeit der Straße repräsentativen Wert (ID2(k)).

**5.** Verfahren nach dem vorhergehenden Anspruch, wobei in Schritt ii) ein Bild eines Abschnitts der Straße, auf der das Kraftfahrzeug fährt, erfasst wird und ein Krümmungswert ($\rho(k)$) dieses Abschnitts der Straße durch Bildanalyse bestimmt wird und wobei der für die Kurvigkeit der Straße repräsentative Wert (ID2(k)) in Abhängigkeit von mindestens dem Krümmungswert ($\rho(k)$) berechnet wird.

**6.** Verfahren nach einem der vorhergehenden Ansprüche, wobei die tatsächliche Größe ($\Gamma_d$) ein von dem Fahrer auf das Lenkrad des Fahrzeugs tatsächlich ausgeübtes Drehmoment ($\Gamma_d$) ist.

**7.** Verfahren nach einem der Ansprüche 1 bis 5, wobei die tatsächliche Größe eine effektive Winkelposition ($\delta_d$) eines Lenkrads des Fahrzeugs ist.

**8.** Verfahren zur Stimulierung der Aufmerksamkeit eines Fahrers eines Kraftfahrzeugs, während dessen Folgendes erfolgt:

- Bestimmen eines Aufmerksamkeitsgrades des Fahrers des Fahrzeugs durch Ausführung eines Verfahrens nach einem der vorhergehenden Ansprüche und
- Auslösen eines Warnsignals für den Fahrer, wenn der zuvor bestimmte Aufmerksamkeitsgrad kleiner als eine vorgegebene Aufmerksamkeitsschwelle ist.

**Claims**

**1.** Method for determining an attention level of a driver of a motor vehicle, comprising the following steps:

i) a plurality of successive values ($\Gamma_d(k)$) of an actual quantity ($\Gamma_d$) representative of a control action of the driver of the motor vehicle on a driving member of this vehicle are acquired in a first time interval,
ii) a type of road (TR(k)) on which the motor vehicle is being driven is determined at successive time intervals, and it is verified whether said type of road (TR(k)) has changed since the preceding interval, and
iii) the attention level of the driver is determined depending on said acquired values ($\Gamma_d(k)$) , and also depending on the result of the verification of a change in the type of road (DTR(k)),
wherein, prior to step iii) :

- a target quantity ($\hat{\Gamma}_d$) representative of an action that the driver would perform on said driving member if the attention level of the driver were high is determined at a plurality of times in said first time interval,
- said target quantity ($\hat{\Gamma}_d$) and said actual quantity ($\Gamma_d$) are compared, at each of these times, by computing a difference (TPE(k)) between said actual quantity ($\Gamma_d$) and said target quantity ($\hat{\Gamma}_d$),
- a reference effective value ($VE_L(k)$) is computed from said differences (TPE(k)) computed during the first time interval,
- the differences computed during a second time interval shorter than the first time interval and included therein are selected,
- a short-time effective value ($VE_C(k)$) of said selected differences (TPE(k)) is computed, and
- said short-time effective value ($VE_C(k)$) is compared to said reference effective value ($VE_L(k)$),
and wherein, in step iii), the attention level of the driver is determined depending on the result of the comparison of said short-time effective value ($VE_C(k)$) to said reference effective value ($VE_L(k)$).

**2.** Method according to the preceding claim, wherein, prior to step iii), a preliminary value (flagl(k)) is computed for the attention level then, in step iii), said preliminary value (flag1(k)) is validated only if it results from step ii) that the type of road (TR(k)) has not changed during a plurality of preceding time intervals.

**3.** Method according to the preceding claim, wherein said plurality of preceding time intervals together form a third time interval that is as least as long as said first time interval.

4. Method according to one of the preceding claims, wherein, in step ii) :

- a value (ID2(k)) representative of the bendiness of the road on which the motor vehicle is being driven is acquired, and
- the type of road (TR(k)) on which the motor vehicle is being driven is determined depending on this value (ID2(k)) representative of the bendiness of said road.

5. Method according to the preceding claim, wherein, in step ii), an image of a segment of the road on which the motor vehicle is being driven is acquired and a curvature value ($\rho$(k)) of this segment of the road is determined by image analysis, and wherein said value (ID2(k)) representative of the bendiness of the road is computed depending on at least said curvature value ($\rho$(k)).

6. Method according to one of the preceding claims, wherein said actual quantity ($\Gamma_d$) is a torque ($\Gamma_d$) actually exerted by the driver on a steering wheel of the vehicle.

7. Method according to one of Claims 1 to 5, wherein said actual quantity is an actual angular position ($\delta_d$) of a steering wheel of the vehicle.

8. Method for stimulating the attention of the driver of a motor vehicle, wherein:

- an attention level of the driver of the vehicle is determined by executing a method according to one of the preceding claims, and
- a warning signal intended for the driver is triggered when the attention level determined beforehand is lower than a preset attention threshold.

**Fig.1**

```
┌─────────┐   ┌─────────┐
│   i)    │   │   i i)  │
│         │   │         │
└────┬────┘   └────┬────┘
     │             │
     └──────┬──────┘
            ▼
      ┌─────────┐
      │   i i i)│
      └────┬────┘
           ▼
      ┌─────────┐
      │  STIM   │
      └─────────┘
```

**Fig.2**

$$ID2(k) = \frac{1}{F} \sum_{i=k-f+1}^{k} |C(i)|$$

ID2(k)

FI2

IDF2(k)

E2 — IDF2 (k) > β ?

TR(k)=1          TR(k)=0

TR(k-1)

DTR (k) = |TR (k) - TR(k-1)|     E3

DTR(k)

DTR (k) = 0 ?     E4

flag2(k)=1

flag2(k)=1
flag2(k+1)=1
.
.
flag2(k+N$_L$)=1

MEM    ρ(k+F-1)...ρ(k)

E1

i i)

20

## Fig.3A

## Fig.3B

## Fig.3C

## Fig.3D

# Fig.4

# Fig.5

## Fig.6A

## Fig.6B

## Fig.6C

## Fig.6D

EP 3 338 261 B1

## Fig.7A

## Fig.7B

## Fig.7C

## Fig.7D

24

# Fig.8A

# Fig.8B

# Fig.8C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6061610 A
- DE 112012006127 T5

- WO 03039914 A1